# EUROPEAN PATENT SPECIFICATION

(11) **EP 2 789 489 B1**
(45) Date of publication and mention of the grant of the patent: **16.09.2015**
(21) Application number: 13198523.6
(22) Date of filing: 19.12.2013
(51) Int. Cl.: B60K 15/03, B60K 15/04, B62J 35/00, A62C 4/00

(54) **Fuel tank and straddle-type vehicle**
Kraftstofftank und Grätschsitzfahrzeug
Réservoir de carburant et véhicule de type à califourchon

(30) Priority: 04.04.2013 JP 2013078511
(43) Date of publication of application: 15.10.2014
(73) Proprietor: Yamaha Hatsudoki Kabushiki Kaisha, Iwata-shi, Shizuoka 438-8501 (JP)
(72) Inventor: Tokitou, Takamasa, Iwata-shi, Shizuoka 438-8501 (JP)
(74) Representative: Grünecker Patent- und Rechtsanwälte PartG mbB

(56) References cited:
- GB-A- 256 799
- US-A1- 2008 271 814
- US-A1- 2012 074 139
- US-A1- 2012 181 275

## Description

### TECHNICAL FIELD

The present invention relates to a fuel tank for ethanol fuel and a straddle-type vehicle provided with the same.

### BACKGROUND ART

In a conventional fuel tank for a vehicle that uses ethanol fuel, a flame arrestor is attached to the outside of a lower edge part of a tank filler in order to prevent sparks from entering the fuel tank (see Japanese Laid-Open Patent Publication No. 2011-219078). The injected fuel passes through the flame arrestor and then is stored inside the tank body.

### SUMMARY

However, there is a problem that the injected fuel may splash when hitting the inner surface of the flame arrestor in the construction described in Japanese Laid-Open Patent Publication No. 2011-219078.

A fuel tank showing the features of the preamble of claim 1 is known from US 2008/0271814.

An object of the present invention is to provide a straddle-type vehicle and a fuel tank that can suppress splashing of the injected fuel.

### Solution to Problem

A fuel tank according to a first embodiment is provided with a tank body, a tank filler formed in a tubular shape, and a flame arrestor formed in a calathiform. The tank body has a filler opening. The tank filler is attached at the filler opening and has a first opening and a second opening. The flame arrestor is attached to the tank filler so as to cover the second opening. An inner diameter of the flame arrestor is smaller than an inner diameter of the tank filler in a direction perpendicular to a center line of the tank filler.

A fuel tank according to a second embodiment is related to the fuel tank of the first embodiment, an outer diameter of the flame arrestor is smaller than an inner diameter of the first opening of the tank filler in the direction perpendicular to the center line.

A fuel tank according to a third embodiment is related to the fuel tank of the first or second embodiment, the tank filler includes a bottom plate formed in an annular shape. The bottom plate has the second opening formed therein. The flame arrestor preferably has a locking part comprising has a flange part formed in an annular shape and a body part formed in a tubular shape. The flange part is preferably disposed on the bottom plate inside the tank filler. The cylindrical body part is inserted into the second opening.

A fuel tank according to a fourth embodiment is related to the fuel tank of the third embodiment, the flame arrestor has a first projection that contacts an inner circumferential surface of the bottom plate.

A fuel tank according to a fifth embodiment is related to the fuel tank of the third or fourth embodiments, the flame arrestor has a second projection that is opposed to an outer surface of the bottom plate of the tank filler.

A fuel tank according to a sixth embodiment is related to the fuel tank according to any one of the third to fifth embodiments, the flame arrestor has a bottom part connected to a lower end part of the body part. A plurality of inflow ports is formed in the bottom part and preferably in the body part. The locking part preferably comprises a coupling part formed in a cylindrical shape and joined to the inside of the flange part, and the coupling part is preferably coupled to the outer circumference of the body part.

A fuel tank according to the seventh embodiment is related to the fuel tank according to any one of the third to sixth embodiments, a plurality of holes is formed in the bottom plate of the tank filler.

A fuel tank according to an eighth embodiment is related to the fuel tank according to any one of the first to seventh embodiments, the inner diameter of the flame arrestor has a size that allows for an insertion of a fueling gun.

A fuel tank according to a ninth embodiment is related to the fuel tank according to any one of the first to eighth embodiments, the inner diameter of the flame arrestor is approximately the same as an outer diameter of the fueling gun.

A straddle-type vehicle is provided with a fuel tank according to the present invention and a vehicle frame that supports the fuel tank.

### Advantageous Effects of Invention

The inner diameter of the flame arrestor is smaller than the inner diameter of the tank filler in the fuel tank according to the first embodiment. Therefore, fuel discharged from the fueling gun can be poured into fuel retained inside the flame arrestor since the fuel can be retained more easily than when the inner diameter of the flame arrestor is larger than the inner diameter of the tank filler. As a result, splashing of fuel hitting the inside surface of the flame arrestor can be suppressed since the area on the inner surface of the flame arrestor that the fuel discharged from the fueling gun hits is narrower.

The flame arrestor can be inserted into the tank filler through the first opening in the fuel tank according to the second embodiment. As a result, the flame arrestor can be attached to the tank filler after an engine operation inspection and after removing the fuel from the fuel tank during a process for manufacturing a motorcycle. In this way, there is no need to provide a hole in the flame arrestor for removing fuel since the flame arrestor can be added later. Further, since the inner diameter of the first opening is generally made to be smaller than the inner diameter of the tank filler in order to attach a tank cap, the outer diameter of the flame arrestor is smaller than the inner diameter of the first opening. As a result, splashing of fuel can be suppressed since the inner diameter of the flame arrestor is smaller.

The flame arrestor inserted through the first opening can be attached to the tank filler easily in the fuel tank according to the third embodiment. The inner diameter of the flame arrestor is made smaller to allow the body part to be inserted into the second opening. Therefore, splashing of the fuel can be suppressed.

Vibration of the flame arrestor can be suppressed in the fuel tank according to the fourth embodiment.

The flame arrestor coming out of the tank filler can be suppressed in the fuel tank according to the fifth embodiment.

A smooth inflow of fuel from the inflow ports in the bottom part can be achieved while fuel that splashes back from the bottom part can flow through the inflow ports of the body part in the fuel tank according to the sixth embodiment. Therefore, splashing of the fuel can be suppressed in comparison to when inflow ports are provided in either the body or the bottom part.

Even if the fuel temporarily overflows the flame arrestor, the fuel is able to flow in from the inflow ports in the bottom plate in the fuel tank according to the seventh embodiment.

Splashing back of the fuel can be further suppressed since the fuel can be injected while the fueling gun is inserted into the flame arrestor in the fuel tank according to the eighth embodiment.

A narrow gap between the inner circumferential surface of the flame arrestor and the outer circumferential surface of the fueling gun is easily filled with fuel when the fueling gun is inserted into the flame arrestor for fueling in the fuel tank according to the ninth embodiment. As a result, the fuel that is discharged from the fueling gun and that splashes back from the bottom surface of the flame arrestor is subdued by the ethanol fuel temporarily retained in the flame arrestor and is less likely to splash out toward the tank filler. As a result, splashing back of the fuel can be further suppressed.

Splashing of the fuel can be suppressed since the fuel hitting a wide area inside the flame arrestor is suppressed in the motorcycle according to the tenth embodiment.

### BRIEF DESCRIPTION OF THE DRAWINGS

FIG. 1 is a side view of a motorcycle.
FIG. 2 is a side perspective of a configuration of a fuel supply system.
FIG. 3 is a cross-section of a configuration of a tank filler and a flame arrestor.
FIG. 4 is a cross-section of a configuration of the tank filler and the flame arrestor.
FIG. 5 is a plan view of a configuration of the tank filler and the flame arrestor.
FIG. 6 is a side view of a configuration of the flame arrestor.
FIG. 7 is an enlargement of the X portion in FIG. 3.
FIG. 8 is an enlargement of the Y portion in FIG. 4.
FIG. 9 is a view for explaining the dimensional relationship between the tank filler and the flame arrestor.

### DETAILED DESCRIPTION OF THE EMBODIMENTS

### (Configuration of motorcycle 1)

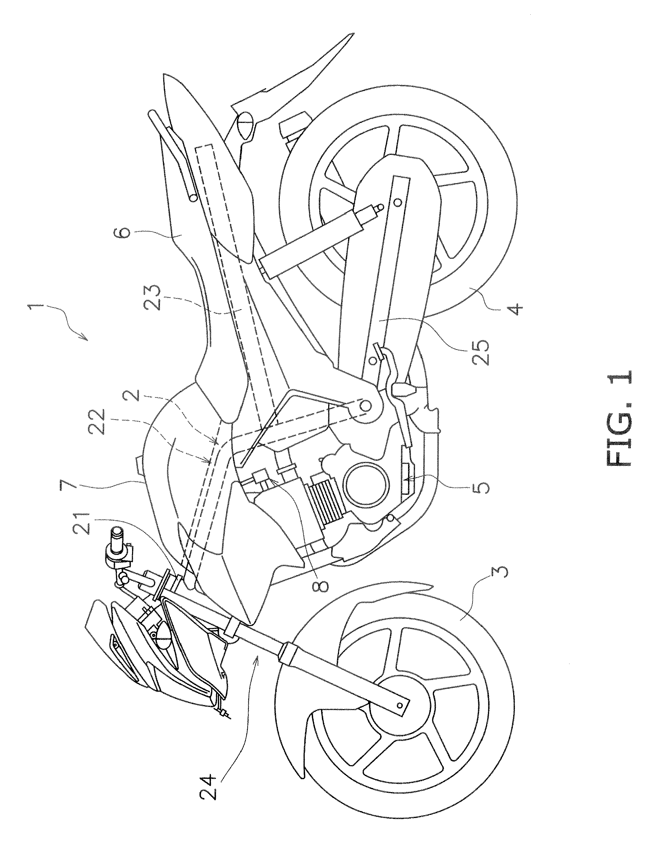

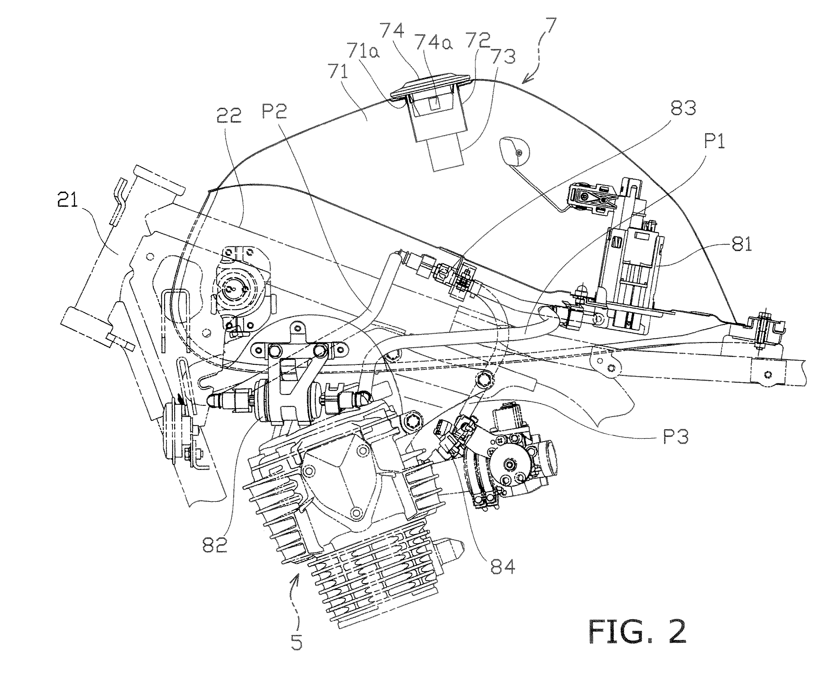

FIG. 1 is a side view of a motorcycle 1. FIG. 2 is a side perspective of a configuration of a fuel supply system 8. In the following description, unless otherwise noted, "front", "rear", "left" and "right" refer to these directions as seen from a rider sitting on the motorcycle 1.

The motorcycle 1 is provided with a vehicle frame 2, a front wheel 3, a rear wheel 4, an engine 5, a seat 6, a fuel tank 7, and the fuel supply system 8.

The vehicle frame 2 includes a head pipe 21, a front frame 22, and a rear frame 23. A front fork 24 is supported by the head pipe 21. The front wheel 3 is supported in a rotatable manner at the lower part of the front fork 24. A swing arm 25 is connected to the rear end of the front frame 22 in a manner that allows swinging up and down. The rear wheel 4 is supported in a rotatable manner at the rear end of the swing arm 25. The rear frame 23 is extends rearward from the front frame 22.

The engine 5 is supported on the front frame 22 below the fuel tank 7. The seat 6 is disposed to the rear of the fuel tank 7. The seat 6 is supported on the rear frame 23.

The fuel tank 7 is a container for storing fuel including ethanol (abbreviated hereinafter as "ethanol fuel"). The fuel tank 7 is disposed above the engine 5 and in front of the seat 6. The fuel tank 7 is supported on the front frame 22. The fuel tank 7 has a tank body 71, a tank filler 72, a flame arrestor 73, and a tank cap 74 as illustrated in FIG. 2.

An upper surface of the tank body 71 has a filler opening 71a formed therein. The tank filler 72 is attached at the filler opening 71a and extends inside the tank body 71. The tank filler 72 is formed in a tubular shape. The flame arrestor 73 is attached to the tank filler 72 and extends inside the tank body 71. The flame arrestor 73 is formed in a calathiform (i.e., a cup-like shape). The tank cap 74 is attached to the tank filler 72 so as to cover the filler opening 71 a. The tank cap 74 has a pawl part 74a.

The fuel supply system 8 supplies ethanol fuel from the fuel tank 7 to the engine 5. The fuel supply system 8 has a fuel pump unit 81, a fuel filter 82, a pressure regulator 83, and an injector 84 as illustrated in FIG. 2.

The fuel pump unit 81, the fuel filter 82, the pressure regulator 83, and the injector 84 are connected by first to third fuel pipes P1 to P3. The fuel pump unit 81 feeds ethanol fuel from the fuel tank 7 to the fuel filter 82. The fuel filter 82 filters the ethanol fuel. The pressure regulator 83 holds the fuel inside the first to third fuel pipes P1 to P3 at a constant pressure. The injector 84 injects the ethanol fuel into an intake pipe of the engine 5.

### (Configuration of tank filler 72 and flame arrestor 73)

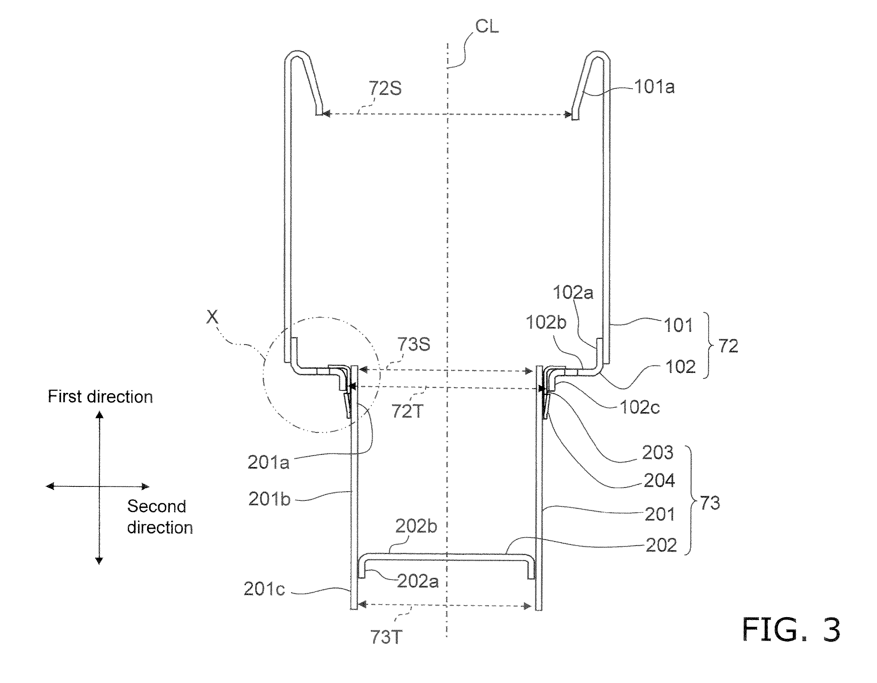

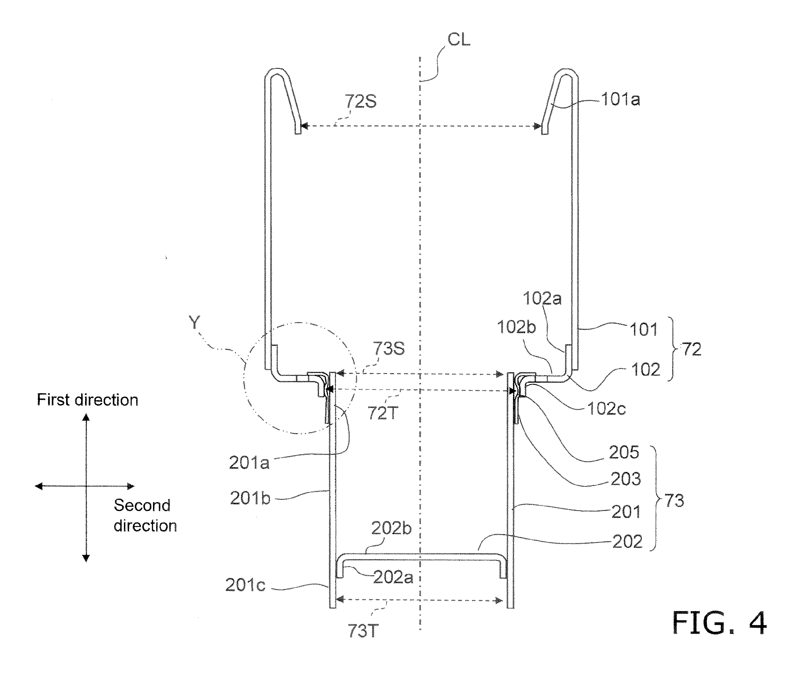

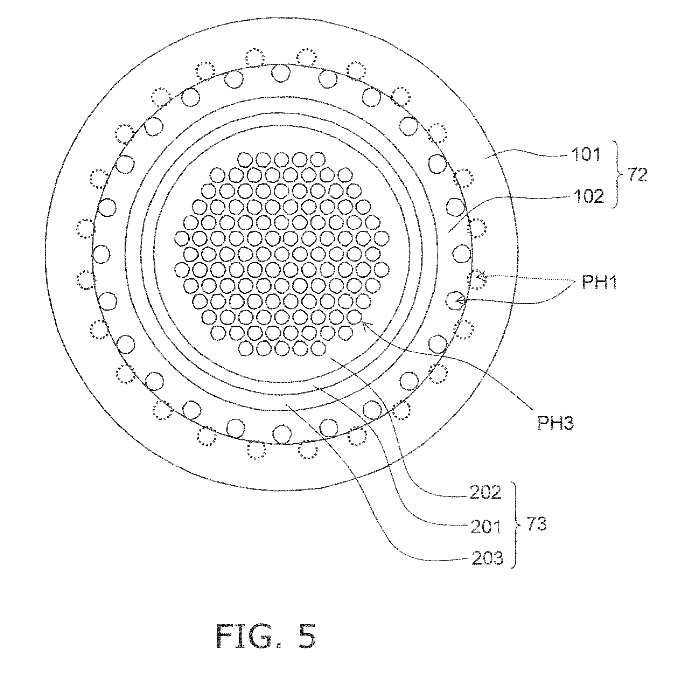

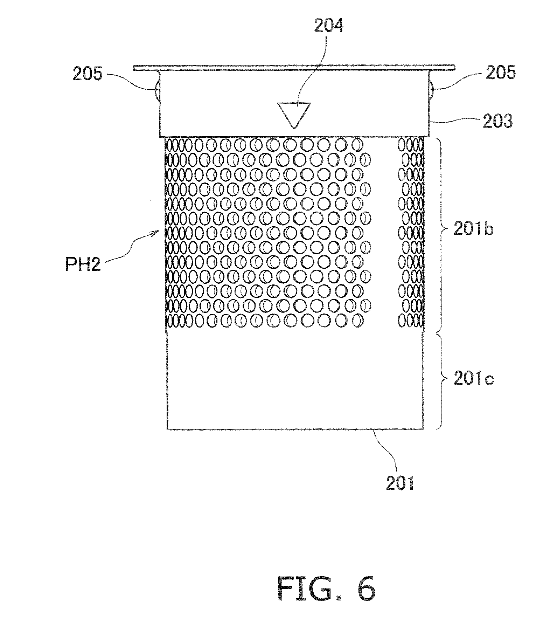

FIGS. 3 and 4 are cross-sections of a configuration of the tank filler 72 and the flame arrestor 73. FIG. 5 is a plan view of the configuration of the tank filler 72 and the flame arrestor 73. FIG. 6 is a side view of the configuration of the flame arrestor 73. FIG. 4 is a view rotated 90 degrees from FIG. 3 around a center line CL. FIG. 5 is a view as seen in a direction parallel to the center line CL of the tank filler 72.

In the following explanation, "inside" and "outside" refer to the inside and outside with respect to the radial direction relative to the center line CL of the tank filler 72. The direction parallel to the center line CL is referred to as a first direction, and the direction perpendicular to the center line CL is referred to as a second direction.

As illustrated in FIGS. 3 and 4, the tank filler 72 has a cylinder part 101, a bottom plate 102, a first opening 72S, and a second opening 72T.

The cylinder part 101 is formed in a cylindrical shape that extends along the center line CL. The cylinder part 101 includes a folded part 101a. The folded part 101 is formed due to the upper end part of the cylinder part 101 being folded to the inside. The pawl part 74a (see FIG. 2) of the tank cap 74 locks onto the folded part 101a. The folded part 101a is formed in an annular shape and the first opening 72S is formed on the inside of the folded part 101a.

The bottom plate 102 is connected to the lower end part of the cylinder part 101. The bottom plate 102 is formed in an annular shape and the second opening 72T is formed inside the bottom plate 102. The bottom plate 102 has a connecting part 102a, an annular plate part 102b, and a contact part 102c. The connecting part 102a is formed in a cylindrical shape and is connected to the lower end part of the cylinder part 101. The annular plate part 102b is formed in a torus shape and is joined to the inside of the connecting part 102a. As illustrated in FIG. 5, a plurality of auxiliary inflow ports PH1 are formed in the annular plate part 102b. The auxiliary inflow ports PH1 are auxiliary inflow openings for preventing the intrusion of sparks while allowing the passage of the ethanol fuel. The auxiliary inflow ports PH1 are punched holes in the present embodiment. However, the present invention is not limited in this way. The contact part 102c is joined to the inside of the annular plate part 102b and extends downward in the first direction.

As illustrated in FIGS. 3 to 5, the flame arrestor 73 has a body part 201, a bottom part 202, a locking part 203, a pair of hook-shaped projections 204, a pair of contact projections 205, a third opening 73S, and a fourth opening 73T.

The body part 201 is formed in a tubular shape. The body part 201 is inserted inside the second opening 72T of the tank filler 72. The body part 201 has an upper end part 201a, a middle part 201b, and a lower end part 201 c.

The upper end part 201 a is connected to the inside of the locking part 203. The upper end part 201a has the third opening 73S formed therein. The middle part 201b is joined to the upper end part 201a and extends downward in the first direction. As illustrated in FIG. 6, a plurality of side surface inflow ports PH2 are formed in the middle part 201b. The side surface inflow ports PH2 are inflow openings for preventing the intrusion of sparks while allowing the passage of the ethanol fuel into the fuel tank 7. The side surface inflow ports PH2 are punched holes in the present embodiment. However, the present invention is not limited in this way. The lower end part 201c is joined to the middle part 201b and extends downward in the first direction. The lower end part 201c has the fourth opening 73T formed therein.

The bottom part 202 is attached to the inside of the lower end part 201c. The bottom part 202 has a connecting part 202a and a plate part 202b. The connecting part 202a is formed in an annular shape and is connected to the lower end part 201c. The plate part 202b is formed in a plate shape and is joined to the inside of the connecting part 202a. As illustrated in FIG. 5, a plurality of bottom surface inflow ports PH3 are formed in the plate part 202b. The plurality of bottom surface inflow ports PH3 are inflow openings for preventing the intrusion of sparks while allowing the passage of the ethanol fuel to the fourth opening 73T. The bottom surface inflow ports PH3 are punched holes in the present embodiment. However, the present invention is not limited in this way.

The locking part 203 is attached to the outside of the upper end part 201 a of the body part 201. The locking part 203 is locked to the second opening 72T of the tank filler 72.

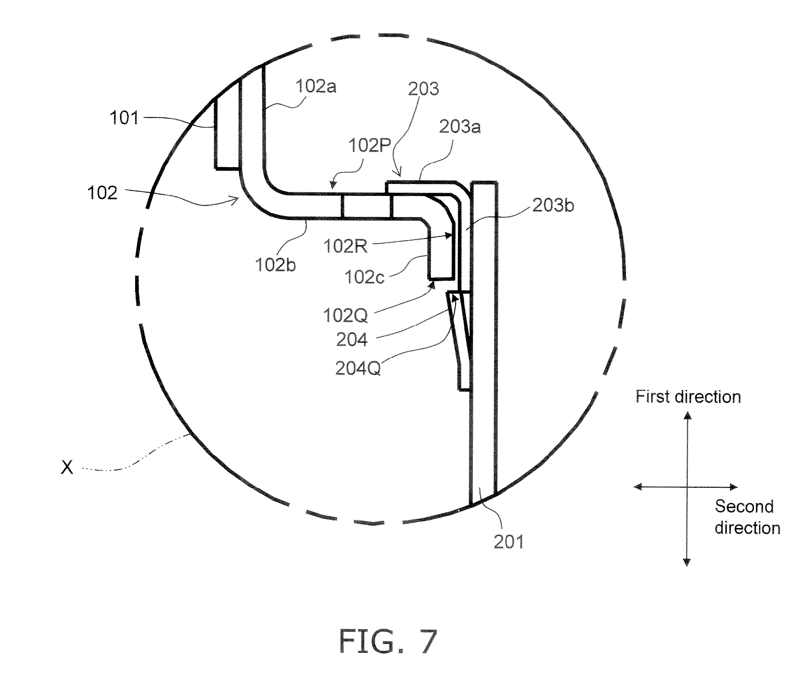

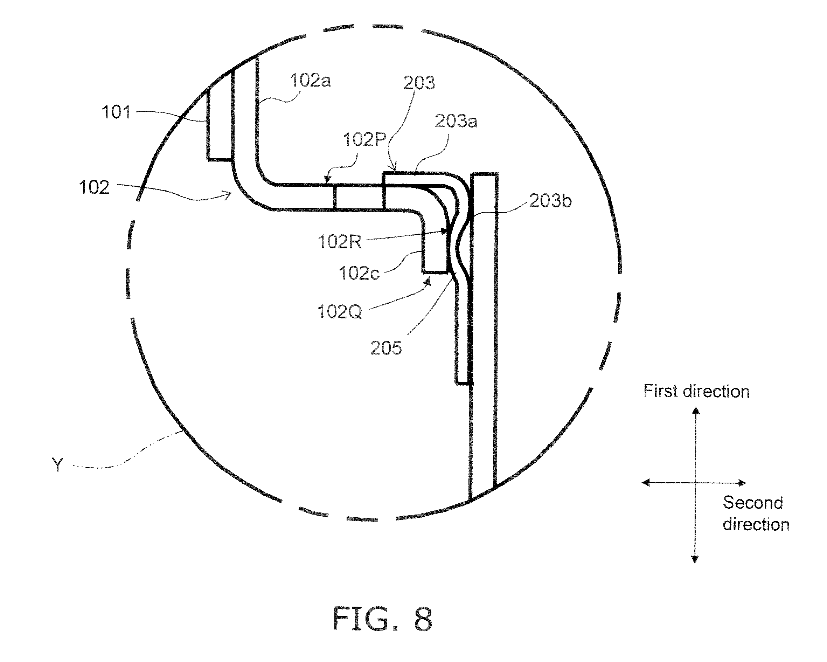

FIG. 7 is an enlargement of the X portion in FIG. 3, and FIG. 8 is an enlargement of the Y portion in FIG. 4. The locking part 203 has a flange part 203a and a coupling part 203b.

The flange part 203a is disposed inside the tank filler 72. The flange part 203a has an annular shape. The flange part 203a is disposed on an inner bottom surface 102P of the bottom plate 102 (specifically, the annular plate part 102b) of the tank filler 72.

The coupling part 203b is formed in a cylindrical shape and is joined to the inside of the flange part 203a. The coupling part 203b extends downward from the flange part 203a in the first direction. The coupling part 203b is coupled to the outer circumference of the body part 201. The pair of hook-shaped projections 204 and the pair of contact projections 205 are provided on the coupling part 203b.

The pair of hook-shaped projections 204 are disposed at positions symmetrical to each other relative to the center line CL. The pair of contact projections 205 are disposed at positions symmetrical to each other relative to the center line CL. The pair of hook-shaped projections 204 and the pair of contact projections 205 are disposed at positions 90 degrees from each other relative to the center line CL. The pair of hook-shaped projections 204 are located further below the pair of contact projections 205.

The hook-shaped projections 204 oppose an outer bottom surface 102Q of the bottom plate 102 (specifically, the contact part 102c) in the tank filler 72 as illustrated in FIG. 7. The hook-shaped projections 204 have an opposing surface 204Q that opposes the outer bottom surface 102Q. The opposing surface 204Q may be located away from the outer bottom surface 102Q or may be in contact with the outer bottom surface 102Q. When the vehicle is shaken while the motorcycle is being driven, the flame arrestor 73 is prevented from coming out of the tank filler 72 due to contact between the opposing surface 204Q and the outer bottom surface 102Q.

The contact projections 205 contact an inner circumferential surface 102R of the bottom plate 102 (specifically, the contact part 102c) in the tank filler 72 as illustrated in FIG. 8. When the vehicle is shaken while the motorcycle is being driven, the flame arrestor 73 is prevented from vibrating since the contact projections 205 come into contact with the inner circumferential surface 102R.

### (Relationship between dimensions of tank filler 72 and flame arrestor 73)

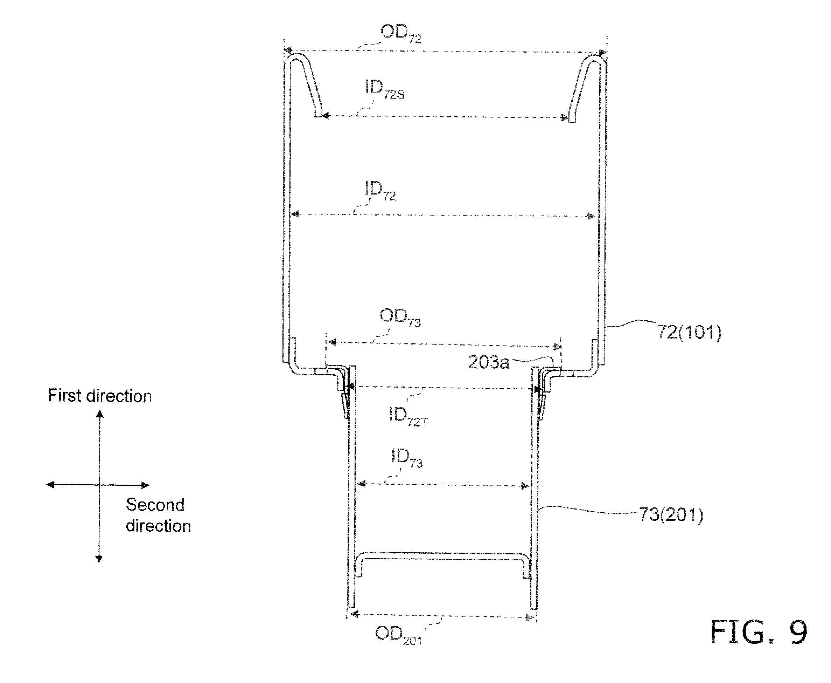

Relationships between dimensions of the tank filler 72 and the flame arrestor 73 will be explained with reference to FIG. 9.

An inner diameter ID₇₃ of the flame arrestor 73 is smaller than an inner diameter ID₇₂ of the tank filler 72 in the second direction. The inner diameter ID₇₃ of the flame arrestor 73 is preferably large enough to allow the insertion of a fueling gun (not illustrated) for supplying the ethanol fuel. Moreover, the inner diameter ID₇₃ of the flame arrestor 73 is preferably approximately the same as the outer diameter of the fueling gun. Specifically, the difference between the inner diameter ID₇₃ of the flame arrestor 73 and the outer diameter of the fueling gun is preferably approximately 10 to 30 mm. The inner diameter ID₇₃ of the flame arrestor 73 may be set easily on the basis of the outer diameter of the fueling gun since the outer diameters of fueling guns are substantially unified. The inner diameter ID₇₃ of the flame arrestor 73 is substantially the same as the inner diameters of the third and fourth openings 73S and 73T.

The inner diameter ID₇₃ of the flame arrestor 73 means the inner diameter of the body part 201 of the flame arrestor 73. The inner diameter ID₇₂ of the tank filler 72 means the inner diameter of the cylinder part 101 of the tank filler 72.

An outer diameter OD₇₃ of the flame arrestor 73 is smaller than an outer diameter OD₇₂ of the tank filler 72. The outer diameter OD₇₃ of the flame arrestor 73 is smaller than an inner diameter ID_{72S} of the first opening 72S of the tank filler 72. The inner diameter ID_{72S} of the first opening 72S is large enough to allow insertion of the fueling gun.

diameter OD₇₃ of the flame arrestor 73 is larger than an inner diameter ID_{72T} of the second opening 72T of the tank filler 72. The outer diameter OD₇₃ of the flame arrestor 73 is the maximum outer diameter of the flame arrestor 73.

An outer diameter OD₂₀₁ of the body part 201 of the flame arrestor 73 is smaller than an outer diameter OD₂₀₃ₐ of the flange part 203a. The outer diameter OD₂₀₁ of the body part 201 is smaller than the inner diameter ID_{72T} of the second opening 72T of the tank filler 72.

### (Operation and effects)

The inner diameter ID₇₃ of the flame arrestor 73 is smaller than the inner diameter ID₇₂ of the tank filler 72. Therefore, fuel discharged from the fueling gun can be poured into fuel retained inside the flame arrestor since the fuel can be retained more easily than when the inner diameter of the flame arrestor is larger than the inner diameter of the tank filler as in the conventional example (see, for example, Japanese Laid-Open Patent Publication No. 2011-219078). As a result, splashing of fuel hitting the inside surface of the flame arrestor 73 can be suppressed since the area on the inner surface of the flame arrestor 73 that the fuel discharged from the fueling gun hits is narrower.

The outer diameter OD₇₃ of the flame arrestor 73 is smaller than the inner diameter ID_{72S} of the first opening 72S of the tank filler 72. Therefore, the flame arrestor 73 can be inserted into the tank filler 72 through the first opening 72S. As a result, the flame arrestor 73 can be attached to the tank filler 72 after an engine operation inspection and after removing the fuel from the fuel tank during a process for manufacturing the motorcycle 1. In this way, there is no need to provide a hole in the flame arrestor 73 for removing fuel since the flame arrestor 73 can be added later. Further, since the inner diameter ID_{72S} of the first opening 72S is generally made to be smaller than the inner diameter ID₇₂ of the tank filler 72 in order to attach the tank cap 74, the outer diameter OD₇₃ of the flame arrestor 73 is smaller than the inner diameter ID_{72S} of the first opening 72S. As a result, splashing of fuel can be suppressed since the inner diameter ID₇₃ of the flame arrestor 73 is smaller.

The flame arrestor 73 has the flange part 203a disposed on the bottom plate 102 of the tank filler 72, and the tubular body part 201 inserted inside the second opening 72T. Therefore, the flame arrestor 73 inserted through the first opening 72S can be attached to the tank filler 72 easily. The inner diameter ID₇₃ of the flame arrestor 73 is made smaller to allow the body part 201 to be inserted into the second opening 72T. Therefore, splashing of the fuel can be suppressed.

The flame arrestor 73 has the contact projections 205 (example of a first projection) that come into contact with the inner circumferential surface 102R of the bottom plate 102 (specifically, the contact part 102c) of the tank filler 72. Therefore, vibration of the flame arrestor 73 can be suppressed.

The flame arrestor 73 has the hook-shaped projections 204 (example of a second projection) that come into contact with the outer bottom surface 102Q of the bottom plate 102 (specifically, the contact part 102c) of the tank filler 72. Therefore, the flame arrestor 73 is prevented from coming out of the tank filler 72.

The plurality of side surface inflow ports PH2 is formed in the body part 201 (specifically, the middle part 201b) of the flame arrestor 73. The plurality of bottom surface inflow ports PH3 is formed in the bottom part 202 (specifically, the plate part 202b) of the flame arrestor 73. Therefore, a smooth inflow of fuel from the bottom surface inflow ports PH3 can be maintained while fuel that splashes back from the bottom part 202 is allowed to flow through the side surface inflow ports PH2. Therefore, splashing of the fuel can be suppressed in comparison to when inflow ports are provided in either the body part 201 or the bottom part 202.

The plurality of auxiliary inflow ports PH1 is formed in the bottom plate 102 (specifically, the annular plate part 102b) of the tank filler 72. Even if the fuel temporarily overflows from the flame arrestor 73, the fuel is able flow in from the auxiliary inflow ports PH1.

The inner diameter ID₇₃ of the flame arrestor 73 is large enough to allow the fueling gun to be inserted. Therefore, splashing of the fuel can be further suppressed since the fuel can be injected while the fueling gun is inserted into the flame arrestor 73.

The inner diameter ID₇₃ of the flame arrestor 73 is approximately the same as the outer diameter of the fueling gun. Therefore, the narrow gap between the inner circumferential surface of the flame arrestor 73 and the outer circumferential surface of the fueling gun is easily filled with the ethanol fuel when the fueling gun is inserted into the flame arrestor 73. As a result, the ethanol fuel that is discharged from the fueling gun and that splashes back from the bottom surface of the flame arrestor 73 is subdued by the ethanol fuel temporarily staying in the flame arrestor 73 and is less likely to splash out toward the tank filler 72. As a result, splashing back of the fuel can be further suppressed.

While the outer diameter OD₇₃ of the flame arrestor 73 in the above embodiment is described as being smaller than the inner diameter ID₇₂ of the first opening 72S, the outer diameter OD₇₃ may be equal to or greater than the inner diameter ID_{72S} of the first opening 72S. In this case, the flame arrestor 73 can be attached to the lower surface of the tank filler 72 for example.

While the outer diameter OD₇₃ of the flame arrestor 73 is smaller than the outer diameter OD₇₂ of the tank filler 72 in the above embodiment, the outer diameter OD₇₃ may be equal to or greater than the outer diameter OD₇₂ of the tank filler 72. In this case, the flame arrestor 73 can be attached to the lower surface or the outer circumferential surface of the tank filler 72 for example.

While the tank filler 72 has the cylinder part 101 and the bottom plate 102 in the above embodiment, the cylinder part 101 and the bottom plate 102 may be formed in an integrated manner.

While the flame arrestor 73 has the body part 201, the bottom part 202, and the locking part 203 in the above embodiment, the body part 201 and the locking part 203 may be formed in an integrated manner, or the body part 201 and the bottom part 202 may be formed in an integrated manner. Moreover, the flange part 203a of the locking part 203 may be coupled directly to the body part 201. In this case, the flange part 203a may be formed in an integrated manner with the body part 201.

While the flame arrestor 73 has the body part 201 and the bottom part 202 formed with inflow ports in the above embodiment, the present invention is not limited as such. The flame arrestor 73 may be formed by a cup-shaped mesh material.

While the flame arrestor 73 has the locking part 203 in the above embodiment, the locking part 203 may not be provided. In this case, the body part 201 may be fixed to the tank filler 72 with a bolt for example.

While the motorcycle 1 is equipped with the fuel supply system 8 in the above embodiment, the configuration of the fuel supply system 8 is not limited to the configuration described above. For example, either the fuel filter 82 or the pressure regulator 83 may be formed in an integrated manner with the fuel pump unit 81. Moreover, the locations of the fuel pump unit 81, the fuel filter 82, and the pressure regulator 83 are not limited to the above locations and may be modified.

Although not discussed in particular in the above embodiment, the content ratio of ethanol in the ethanol fuel may be set as appropriate. For example, the content ratio of ethanol in the ethanol fuel may be set to 20% to 100%, but is not limited as such.

## Claims

1. A fuel tank (7), comprising:
a tank body (71) having a filler opening (71 a);
a tank filler (72) attached at the filler opening (71a), the tank filler (72) formed in a tubular shape and having a first opening (72S) and a second opening (72T); and
a flame arrestor (73) attached to the tank filler (72) so as to cover the second opening (72T), the flame arrestor (73) formed in a calathiform; and
an inner diameter (ID₇₃) of the flame arrestor (73) being smaller than an inner diameter (ID₇₂) of the tank filler (72) in a direction perpendicular to a center line (CL) of the tank filler (72);
wherein the inner diameter (10₇₂) of the tank filler (72) is larger than an inner diameter (ID_{72S}) of the first opening (72S) of the tank filler (72) in the direction perpendicular to the center line (CL), **characterized in that**
the inner diameter (ID_{72S}) of the first opening (72S) is larger than an inner diameter (ID_{72T}) of the second opening (72T) of the tank filler (72) in the direction perpendicular to the center line (CL).

2. The fuel tank (7) according to claim 1, wherein an outer diameter (OD₇₃) of the flame arrestor (73) is smaller than an inner diameter of the first opening (72S) of the tank filler (72) in the direction perpendicular to the center line (CL).

3. The fuel tank (7) according to claim 1 or 2, wherein the tank filler (72) includes a bottom plate (102) formed in an annular shape, and the bottom plate (102) has the second opening (72T) formed therein.

4. The fuel tank (7) according to claim 3, wherein the flame arrestor (73) has a locking part (203) comprising a flange part (203a) formed in an annular shape, and a body part (201) formed in a tubular shape.

5. The fuel tank (7) according to claim 4, wherein the flange part (203a) is disposed on the bottom plate (102) inside the tank filler (72), and the cylindrical body part (201) is inserted into the second opening (72T).

6. The fuel tank (7) according to any one of claims 3 to 5, wherein the flame arrestor (73) has a first projection (205) that contacts an inner circumferential surface (102R) of the bottom plate (102).

7. The fuel tank (7) according to any one of claims 3 to 6, wherein the flame arrestor (73) has a second projection (204) that is opposed to an outer surface (102Q) of the bottom plate (102) of the tank filler (72).

8. The fuel tank (7) according to any one of claims 4 to 7, wherein the flame arrestor (73) has a bottom part (202) connected to a lower end part of the body part (201), and a plurality of inflow ports (PH3) is formed in the bottom part (202).

9. The fuel tank (7) according to any one of claims 4 to 8, wherein a plurality of inflow ports (PH2) is formed in the body part (201).

10. The fuel tank (7) according to any one of claims 4 to 9, wherein the locking part (203) further comprises a coupling part (203b) formed in a cylindrical shape and joined to the inside of the flange part (203a), and the coupling part (203b) is preferably coupled to the outer circumference of the body part (201).

11. The fuel tank (7) according to any one of claims 3 to 10, wherein a plurality of holes (PH1) is formed in the bottom plate (102) of the tank filler (72).

12. The fuel tank (7) according to any one of claims 1 to 11, wherein the inner diameter (ID₇₃) of the flame arrestor (73) has a size that allows for an insertion of a fueling gun.

13. The fuel tank (7) according to claim 12, wherein the inner diameter (ID₇₃) of the flame arrestor (73) is approximately the same as an outer diameter of the fueling gun.

14. A straddle-type vehicle comprising:
a fuel tank (7) according to any one of claims 1 to 13, and
a vehicle frame (2) supporting the fuel tank (7).

## Patentansprüche

1. Kraftstofftank (7), der umfasst:
einen Tankkörper (71), der eine Einfüllöffnung (71 a) aufweist,
einen Tankeinfüllstutzen (72), der an der Einfüllöffnung (71a) angebracht ist, wobei der Tankeinfüllstutzen (72) mit einer Rohrform ausgebildet ist und eine erste Öffnung (72S) und eine zweite Öffnung (72T) aufweist, und
eine Flammsperre (73), die an dem Tankeinfüllstutzen (72) angebracht ist, um die zweite Öffnung (72T) zu bedecken, wobei die Flammsperre (73) mit einer Napfform ausgebildet ist,
wobei der Innendurchmesser (ID₇₃) der Flammsperre (73) kleiner als der Innendurchmesser (ID₇₂) des Tankeinfüllstutzens (72) in einer Richtung senkrecht zu einer Mittenlinie (CL) des Tankeinfüllstutzens (72) ist,
wobei der Innendurchmesser (ID₇₂) des Tankeinfüllstutzens (72) größer als der Innendurchmesser (ID_{72S}) der ersten Öffnung (72_{S}) des Tankeinfüllstutzens (72) in der Richtung senkrecht zu der Mittenlinie (CL) ist,
**dadurch gekennzeichnet, dass**:
der Innendurchmesser (ID_{72S}) der ersten Öffnung (72S) größer als der Innendurchmesser (ID_{72T}) der zweiten Öffnung (72T) des Tankeinfüllstutzens (72) in der Richtung senkrecht zu der Mittenlinie (CL) ist.

2. Kraftstofftank (7) nach Anspruch 1, wobei der Außendurchmesser (OD₇₃) der Flammsperre (73) kleiner als der Innendurchmesser der ersten Öffnung (72S) des Tankeinfüllstutzens (72) in der Richtung senkrecht zu der Mittenlinie (CL) ist.

3. Kraftstofftank (7) nach Anspruch 1 oder 2, wobei der Tankeinfüllstutzen (72) eine mit einer Ringform ausgebildete Bodenplatte (102) umfasst und die Bodenplatte (102) die darin ausgebildete zweite Öffnung (72T) aufweist.

4. Kraftstofftank (7) nach Anspruch 3, wobei die Flammsperre (73) einen Sperrteil (203) aufweist, der einen mit einer Ringform ausgebildeten Flanschteil (203a) und einen mit einer Rohrform ausgebildeten Körperteil (201) umfasst.

5. Kraftstofftank (7) nach Anspruch 4, wobei der Flanschteil (203a) an der Bodenplatte (102) in dem Tankeinfüllstutzen (72) angeordnet ist und der zylindrische Körperteil (201) in die zweite Öffnung (72T) eingesteckt ist.

6. Kraftstofftank (7) nach einem der Ansprüche 3 bis 5, wobei die Flammsperre (73) einen ersten Vorsprung (205) aufweist, der eine Innenumfangsfläche (102R) der Bodenplatte (102) kontaktiert.

7. Kraftstofftank (7) nach einem der Ansprüche 3 bis 6, wobei die Flammsperre (73) einen zweiten Vorsprung (204) aufweist, der einer Außenfläche (102Q) der Bodenplatte (102) des Tankeinfüllstutzens (72) gegenüberliegt.

8. Kraftstofftank (7) nach einem der Ansprüche 4 bis 7, wobei die Flammsperre (73) einen Bodenteil (202) aufweist, der mit einem unteren Endteil des Körperteils (201) verbunden ist, und eine Vielzahl von Einflussöffnungen (PH3) in dem Bodenteil (202) ausgebildet ist.

9. Kraftstofftank (7) nach einem der Ansprüche 4 bis 8, wobei eine Vielzahl von Einflussöffnungen (PH2) in dem Körperteil (201) ausgebildet ist.

10. Kraftstofftank (7) nach einem der Ansprüche 4 bis 9, wobei der Sperrteil (203) weiterhin einen Kopplungsteil (203b) umfasst, der mit einer zylindrischen Form ausgebildet ist und mit dem Inneren des Flanschteils (203a) verbunden ist, wobei der Kopplungsteil (203b) vorzugsweise mit dem Außenumfang des Körperteils (201) gekoppelt ist.

11. Kraftstofftank (7) nach einem der Ansprüche 3 bis 10, wobei eine Vielzahl von Löchern (PH1) in der Bodenplatte (102) des Tankeinfüllstutzens (72) ausgebildet ist.

12. Kraftstofftank (7) nach einem der Ansprüche 1 bis 11, wobei der Innendurchmesser (ID₇₃) der Flammsperre (73) eine Größe aufweist, die das Einstecken einer Zapfpistole gestattet.

13. Kraftstofftank (7) nach Anspruch 12, wobei der Innendurchmesser (ID₇₃) der Flammsperre (73) ungefähr gleich dem Außendurchmesser der Zapfpistole ist.

14. Grätschsitzfahrzeug, das umfasst:
einen Kraftstofftank (7) nach einem der Ansprüche 1 bis 13, und
einen Fahrzeugrahmen (2), der den Kraftstofftank (7) hält.

## Revendications

1. Réservoir de carburant (7) comprenant :
un corps de réservoir (71) possédant une ouverture de remplissage (71a) ;
un remplissage de réservoir (72) fixé à l'ouverture de remplissage (71a), le remplissage de réservoir (72) étant conformé sous forme tubulaire et possédant une première ouverture (72S) et une seconde ouverture (72T) ; et
un pare-flammes (73) fixé au remplissage de réservoir (72) de façon à recouvrir la seconde ouverture (72T), le pare-flammes (73) étant calathiforme ; et
le diamètre intérieur (ID₇₃) du pare-flammes (73) étant inférieur au diamètre intérieur (ID₇₂) du remplissage de réservoir (72) dans une direction perpendiculaire à l'axe central (CL) du remplissage de réservoir (72) ;
dans lequel le diamètre intérieur (ID₇₂) du remplissage de réservoir (72) est supérieur au diamètre intérieur (ID_{72S}) de la première ouverture (72_{S}) du remplissage de réservoir (72) dans la direction perpendiculaire à l'axe central (CL), **caractérisé en ce que**
le diamètre intérieur (ID_{72S}) de la première ouverture (72S) est supérieur au diamètre intérieur (ID_{72T}) de la seconde ouverture (72T) du remplissage de réservoir (72) dans la direction perpendiculaire à l'axe central (CL).

2. Réservoir de carburant (7) selon la revendication 1, dans lequel le diamètre extérieur (OD₇₃) du pare-flammes (73) est inférieur au diamètre intérieur de la première ouverture (72S) du remplissage de réservoir (72) dans la direction perpendiculaire à l'axe central (CL).

3. Réservoir de carburant (7) selon la revendication 1 ou 2, dans lequel le remplissage de réservoir (72) comporte une plaque de fond (102) conformée sous forme annulaire et la plaque de fond (102) comporte la seconde ouverture (72T) formée dans celle-ci.

4. Réservoir de carburant (7) selon la revendication 3, dans lequel le pare-flammes (73) comporte une partie de blocage (203) comprenant une partie de bride (203a) conformée sous forme annulaire et une partie de corps (201) conformée sous forme tubulaire.

5. Réservoir de carburant (7) selon la revendication 4, dans lequel la partie de bride (203a) est disposée sur la plaque de fond (102) à l'intérieur du remplissage de réservoir (72) et la partie de corps cylindrique (201) est insérée dans la seconde ouverture (72T).

6. Réservoir de carburant (7) selon l'une quelconque des revendications 3 à 5, dans lequel le pare-flammes (73) comporte une première projection (205) en contact avec la surface circonférentielle intérieure (102R) de la plaque de fond (102).

7. Réservoir de carburant (7) selon l'une quelconque des revendications 3 à 6, dans lequel le pare-flammes (73) comporte une seconde projection (204) qui est opposée à la surface extérieure (102Q) de la plaque de fond (102) du remplissage de réservoir (72).

8. Réservoir de carburant (7) selon l'une quelconque des revendications 4 à 7, dans lequel le pare-flammes (73) comporte une partie inférieure (202) raccordée à la partie d'extrémité inférieure de la partie de corps (201) et une pluralité d'orifices d'arrivée (PH3) sont formés dans la plaque de fond (202).

9. Réservoir de carburant (7) selon l'une quelconque des revendications 4 à 8, dans lequel une pluralité d'orifices d'arrivée (PH2) sont formés dans la partie de corps (201).

10. Réservoir de carburant (7) selon l'une quelconque des revendications 4 à 9, dans lequel la partie de blocage (203) comprend en outre une partie de couplage (203b) conformée sous forme cylindrique et reliée à l'intérieur de la partie de bride (203a), et la partie de couplage (203b) est de préférence couplée à la circonférence extérieure de la partie de corps (201).

11. Réservoir de carburant (7) selon l'une quelconque des revendications 3 à 10, dans lequel une pluralité de trous (PH1) sont formés dans la plaque de fond (102) du remplissage du réservoir (72).

12. Réservoir de carburant (7) selon l'une quelconque des revendications 1 à 11, dans lequel le diamètre intérieur (ID₇₃) du pare-flammes (73) possède des dimensions permettant l'insertion d'un pistolet de ravitaillement en carburant.

13. Réservoir de carburant (7) selon la revendication 12, dans lequel le diamètre intérieur (ID₇₃) du pare-flammes (73) est approximativement identique au diamètre extérieur du pistolet de ravitaillement en carburant.

14. Véhicule du type à chevaucher comprenant :
un réservoir de carburant (7) selon l'une quelconque des revendications 1 à 13, et
un châssis de véhicule (2) supportant le réservoir de carburant (7).
